# EUROPEAN PATENT SPECIFICATION

(11) **EP 2 448 421 B1**
(45) Date of publication and mention of the grant of the patent: **13.12.2017**
(21) Application number: 10705543.6
(22) Date of filing: 11.02.2010
(51) Int. Cl.: A23L 2/52, A23D 7/00, A23D 7/005, A23L 29/10, A23L 33/12

(54) **HIGH CONCENTRATED PUFA EMULSIONS**
HOCHKONZENTRIERTE PUFA EMULSIONEN
EMULSIONS CONCENTRÉES EN PUFA

(30) Priority: 11.02.2009 EP 09152506
(43) Date of publication of application: 09.05.2012
(73) Proprietor: DSM IP Assets B.V., 6411 TE Heerlen (NL)
(72) Inventor: VOELKER, Karl Manfred, 79111 Freiburg (DE); LINDEMANN, Thomas, 79713 Bad Säckingen (DE); HUG, Denis, 68330 Huningue (FR)
(74) Representative: Kurt, Manfred
(86) International application number: PCT/EP2010/000836
(87) International publication number: WO 2010/091853

(56) References cited:
- EP-A1- 0 972 513
- EP-A1- 1 969 953
- WO-A1-91/11110
- WO-A1-2006/081958
- WO-A1-2008/022131
- WO-A2-2009/102845
- US-A- 5 668 183

## Description

The present invention relates to an oil-in-water-emulsion, which comprises a high amount of PUFA and which comprises a polymeric hydrocolloid from a plant source as an emulsifier. These emulsions can be used in any kind of food products, especially in beverages.

It is one goal of the present invention to provide a high concentrated PUFA (Poly Unsaturated Fatty Acids) emulsion, which can then be used in food products. The advantages of using high concentrated emulsions can be seen in less transportation cost, less water consumption, etc.

High concentrated emulsions of PUFAs are known from the prior art. Such emulsions are usually prepared by using either gelatine or lecithin as emulsifiers. Both of these compounds (or group of compounds) have some disadvantages. Gelatine is a translucent, colourless, brittle, nearly tasteless solid substance, extracted from the collagen inside animals' connective tissue. Therefore it is not suitable with a vegetarian diet and furthermore the use of such a compound can be prohibited by religious laws.

Lecithin is a lipid material, which is found in all living cells as a major component of cell membranes, which regulate the nutrients entering and exiting the cell. The term "lecithin" is the common name for a series of related compounds called phosphatidylcholines. Lecithin is a phospholipid mixture of phosphatides consisting mainly of phosphatidylcholine, phosphatidyl ethanolamine, phosphatidyl serine, phosphatidyl inositol combined with various other substances, including fatty acids and carbohydrates. Lecithins also contain phosphorous and nitrogenous (e.g. choline) compounds. Lecithin may be isolated either from egg yolk or from soy beans, from which it is extracted chemically or mechanically. Therefore lecithin extracted from egg yolk is problematic for a vegetarian diet and lecithin when sourced from soy bean is problematic because of possible allergic reaction. For example in Europe as well as in the USA food products comprising soybean material must be labelled (EU directive 2003/89/EC; US Food allergen Labelling and Consumer Protection Act of 2004). EP1969953 relates to encapsulated or spray-dried nutritional compositions that are allergen-free or at least protein or dairy free. WO2006/081958 relates to powders having particle diameters of 50-500microns comprising PUFA in the matrix of a modified polysaccharide. The particles contain a surface oil content of less than 0.5% w/w. EP0972513 relates to emulsified powders comprising an oil-substance, and a chemically modified starch. The oils-substance includes fat-soluble vitamins, unsaturated fatty acids or oil-soluble flavours. WO91/11110 **is related to an animal feed with contains a fat or oil and ligno-sulphonates, made by blending the fat or oil with the lignosulphate and then heat treating. This reduced the tendency of the fat or oil to oxidize.**

US 5,668,183 **is a cold water-dispersible preparation containing a lignin derivative as the matrix component.**

WO 2009/102845 **describes a fruit or vegetable juice concentrate which is combined with an oil containing an omega-3 fatty acid at a specific ratio. An additional fiber binding agent is also added.**
Consequently, there is a great interest to find suitable alternatives for gelatine and lecithin as emulsifiers.

Therefore a further goal of the present invention was to find emulsifiers, which allow producing high concentrated PUFA emulsions and not having the disadvantages mentioned above.

Surprisingly, it has been found that use of at least one emulsifier, which is a polymeric hydrocolloid originated from a plant source results in the desired emulsions.

Therefore the present invention relates to an emulsion comprising
(i) 5-20 weight-% (wt-%), based on the total weight of the emulsion, of PUFA,**(polyunsaturated fatty acid)** and
(ii) **12-35 wt**-%, based on the total weight of the emulsion, of at least one emulsifier, which is a polymeric hydrocolloid originated from a plant source,
(iii) **5-40** wt-%, based on the total weight of the emulsion, of at least one adjuvant, and
(iv) **18-40** wt-%, based on the total weight of the emulsion, of water **in a liquid food product.**

It is clear that the addition of all wt-%'s is always 100.

In the context of the present invention the term "PUFA" (Polyunsaturated fatty acid) is used in its generally accepted meaning; it relates to fatty acids with at least 2 carbon-carbon double bonds (preferably 2 to 6, more preferably 4 or 5 or 6 carbon-carbon double bonds), preferably consisting of 16-24 carbon atoms (preferably 18-22 carbon atoms), and comprise n-3, n-6 and n-9 acids. Although the term PUFA defines free acids it is generally understood to also mean their salts and these acids in the form of their naturally occurring esters, i.e. as glycerides (comprising mono-, di- and triglycerides) and in form of esters into which they are converted, e.g. by transesterification, such as ethyl esters. PUFAs of preferred interest in the context of the present invention are n-3 and n-6 PUFAs, especially EPA (eicosapenta-5,8,11,14,17-enoic acid), DPA (docosapentaenoic acid), DHA (docosahexa-4,7,10,13,16,19-enoic acid), GLA (y-linolenic acid) and ARA (arachidonic acid), preferably of food-grade quality, as single compounds or in mixtures, preferably in the form of their esters, e.g., triglycerides, or ethyl esters, especially as components of oils obtained from marine animals, preferably from fish, from plants or by fermentation. They can be stabilized and/or deodorized by methods known in the art, e.g., by addition of antioxidants, emulsifiers, spices or herbs, such as rosemary or sage extracts.

In a preferred embodiment of the present invention the term PUFA refers to refined fish oils commercially available and known under the trade mark ROPUFA® (from DSM Nutritional Products Ltd, Kaiseraugst, Switzerland). In a further preferred embodiment of the present invention the ROPUFA® has been stabilized with tocopherols or tocotrienols (natural mixtures or synthetically prepared, preferably α-tocopherol), if desired together with other antioxidants and/or deodorants, such as ascorbyl palmitate and/or rosemary extract.

Preferred derivatives of the polyunsaturated fatty acids are their esters, for example glycerides and, in particular, triglycerides and the ethyl esters. Triglycerides of n-3 polyunsaturated fatty acids are especially preferred.

The triglycerides can contain 3 uniform unsaturated fatty acids or 2 or 3 different unsaturated fatty acids. It also covers the mixture of such compounds. Furthermore, they may also partly contain saturated fatty acids.

When the derivatives are triglycerides, normally three different n-3 polyunsaturated fatty acids are esterified with glycerol. In one preferred embodiment of the present invention triglycerides are used, whereby 30 % of the fatty acid parts are n-3 fatty acids and of these 25 % are long-chain polyunsaturated fatty acids. Commercially available ROPUFA® '30' n-3 Food Oil is preferably used to prepare emulsions according to the present invention.

Commercially available ROPUFA® '75' n-3 EE can also be used for the preparation of emulsions according to the present invention. ROPUFA® '75' n-3 EE is refined marine oil in form of an ethyl ester with minimum content of 72 % n-3 fatty acid ethyl ester. It is stabilized with mixed tocopherols, ascorbyl palmitate, and citric acid and contains rosemary extract.

It is also possible to use naturally occurring oils (one ore more components) containing triglycerides of polyunsaturated fatty acids, for example marine oils (fish oils) and/or plant oils.

Oils which comprise triglycerides of polyunsaturated fatty acids are olive oil, sunflower seed oil, evening primrose seed oil, borage oil, grape seed oil, soybean oil, groundnut oil, wheat germ oil, pumpkin seed oil, walnut oil, sesame seed oil, rapeseed oil (canola), blackcurrant seed oil, kiwifruit seed oil, oil from specific fungi and fish oils.

It is therefore obvious that in the context of the present invention the term "PUFA" can be one compound or a mixture of compounds.

The content of the PUFA in emulsion according to present invention is 6-18 wt-%, based on the total weight of the emulsion. A preferred embodiment of the present invention emulsion comprises PUFA in the form of triglycerides.

The emulsion according to the present invention contains least one emulsifier, which is a polymeric hydrocolloid originated from a plant source. Preferably, such an emulsifier is chosen from the group consisting of modified starches, gum arabic (=gum acacia) and lignosulfonates.

Starch having the chemical formula (C₆H₁₀O₅)ₙ is a polysaccharide carbohydrate consisting of a large number of glucose monosaccharide units joined together by glycosidic bonds.
All plant seeds and tubers contain starch. Starches are commonly extracted from plants, such as corn, sorghum, wheat, rice, tapioca, arrowroot, sago, potato, quinoa and amaranth. The starches can be modified in various manners. It can be done physically and chemically.

Pregelatinzed starches are examples of physically modified starches whereas acidic modified, oxidized, cross-linked, starch esters, starch ethers and cationic starches are examples of chemically modified starches.

Gum arabic is a natural gum also called gum acacia, chaar gund, char goond or meska. Gum arabic is a complex mixture of saccharides and glycoproteins, which gives it its most useful property: it is perfectly edible.

After polysaccharides, lignin is the most abundant organic polymer in the plant world, especially in wood. In wood, depending upon its nature (hardwood or softwood), lignin is present in amounts from 16 % up to 37 % (w/w). It is formed in woody plants by a dehydrogenating polymerization of three phenylpropanoid monomers: p-coumaryl alcohol, coniferyl alcohol and sinapyl alcohol. Its molecular weight depends upon the degree of polymerisation and is estimated to be at least 20 kDa. While lignin is not soluble in water it is made water-soluble and can be separated from wood and its other major component, cellulose, by the pulping process used in the production of paper.

The wood is cut into small pieces and the wood chips are then treated either with sulphurous acid containing solutions of hydrogen sulfites (i.e. magnesium, calcium, sodium or ammonium hydrogen sulfite in an excess of sulphurous acid; sulfit pulping) or with alkaline sodium hydroxide - sodium sulphate solutions (with optional addition of sodium sulphide and anthraquinone; alkaline pulping) at 130°C - 180°C.

The products obtained are lignosulfonates (also called lignin sulfonates and sulfite lignines) and kraft lignins (also called sulfate lignines, obtained from kraft pulping liquor by precipitation with sulphuric acid, hydrochloric acid or carbon dioxide). Kraft lignins are sulfonated to varying degrees with sodium sulfite at 150°C - 200°C, or sulfomethylated with sulfite and formaldehyde at low temperature (below 100°C). The water-dispersible lignin derivatives in form of sodium, calcium and ammonium sulfonates disclosed in US 5,668,183 to be useful as matrices for compositions of fat-soluble active ingredients comprise both the above-defined lignosulfonates and sulfonated kraft lignins.

Commercial lignosulfonate products, available from different producers under different trade marks so far, typically consist of about 40-90 % ligninsulfonate and smaller amounts of various saccharides, ash, carbohydrates, acetates, formiates, resins, etc., with their composition depending very much on the quality of the wood which is used.

With increasing demands for high quality products, in terms of high purity and standardization of their ingredients, especially when human usage is envisaged, a need exists of making available very pure, standardized lignosulfonates which are accepted by the registration authorities as of "food-grade" quality. So far no cold water-dispersible, pulverous compositions or preparations of fat-soluble substances containing "food-grade" water-soluble or water-dispersible lignosulfonate as the main matrix do exist.

The terms "food-grade" lignosulfonate and "of food-grade quality" as used in the context of the present invention define a lignosulfonate quality standard which is accepted and certified by the registration authorities for food, thus allowing explicitly the lignosulfonates to be used as components of compositions and preparations for human usage, particularly for the manufacture of food, preferably beverages, and cosmetic or pharmaceutical preparations for human usage. This, of course, includes their use in animal applications, e.g., animal feed. The quality standard "food-grade" excludes components and impurities which are known to be or may be harmful to the health of human beings at least when certain limits are reached or passed. While this standard can be applied to lignosulfonates of any molecular weight, in the present case this standard relates preferably to a defined weight average molecular weight range of the lignosulfonate in the range of 30 - 150 kDa, preferably in the range of 40-65 kDa, and, in any case, to a high degree of purity. The degree of purity is determined by several identity tests: the test for degree of sulfonation, the test for calcium and the tests for impurities.

The content of the emulsifier in emulsion according to the present invention is 12-35 wt-%, based on the total weight of the emulsion. The present invention also relates to emulsions comprising at least one adjuvant. The adjuvant(s) is (are) usually present in the amount of **5-40 wt**-%, based on the total weight of the emulsion.

The adjuvant used in the present invention are commonly used and commonly known compounds. A person skilled in the art of emulsions is familiar with such adjuvants.

Due to the fact that the emulsions of the present invention are used as or in food products, these adjuvants must have food grade quality. The adjuvants are usually selected from the group consisting of vitamins, co-enzymes, monosaccharides, disaccharides, oligosaccharides, polysaccharides, glycerol, triglycerides, water-soluble antioxidants and fat-soluble antioxidants. It is obvious because the emulsions of the present invention are used in food products (especially in beverages), all ingredients of the emulsions must be food grade.

The emulsions according to the present invention have excellent properties. They are stable, storage stable, easy to prepare, easy to handle, versatile in usage, etc. The emulsion according to the present invention comprises water. It comprises **18-40 wt**-% of water**.**

A further embodiment of the present invention relates to the use of the emulsions as described above in a food product.

The food product can be any liquid food products, such as beverages and soups. The term beverage covers anything, which is drunk by a consumer. The beverage can be sweet, savoury, carbonated, still, hot, cold, etc. The beverage can also be in form which is usually to be diluted before drunk (concentrate).

The concentration of each of these drinks should be in a way that it allows to have about 125 mg EPA/DHA per 250 ml serving. This is of course depending on the kind of beverage.
The emulsions according to the present invention are very suitable to use in liquid food products, which have a pH of around 3.

It is also possible to use an emulsion according to the present invention as a food product as such. Such a food product is usually called food supplement. Next to the essential ingredients of the inventive emulsion such a food supplement can contain further additives. Such an additive can be a flavour additive, colour additive, etc.

The present invention is illustrated by the following Examples. The percentages are given in weight-% and the temperatures are given in Celsius.

### Examples

### Example 1

The preparation of the emulsion is carried out under N₂-atmosphere. 40g gum acacia and 40g glycerol are mixed in a reaction vessel of 0.5 l volume. 40 ml of water is added and the gum acacia is dissolved under stirring (500 rpm) at 65°C (30 min.). The matrix is the cooled down to 40°C. 10 g sodium ascorbate dissolved in 10 ml water is added to the matrix. 60 g of the ROPUFA '30' n-3 Food Oil is emulsified into the aqueous matrix under stirring with a micer disc (4800 rpm, 40°C). After 40 min. of emulsifying the PUFA emulsion is ready.

The preparation of Examples 2 and 3 are made in analogy to Example 1.

In Example 2 the Coenzyme Q10 was dissolved in the ROPUFA '30' n-3 Food Oil prior to emulsification.

### Examples 1-3

| **Ingredients** | **Exp.1** | **Exp.2** | **Exp.3** |
|---|---|---|---|
| | [wt-%] | [wt-%] | [wt-%] |
| ROPUFA '30' n-3 Food Oil (from DSM) | 30.0 | 30.0 | 30.0 |
| Coenzyme Q10 | --- | 1.0 | |
| OSA (octenyl-succinate) modified Starch Capsul® HS (from National Starch) | --- | --- | 25.0 |
| Gum Acacia | 20.0 | 20.0 | --- |
| Glycerol | 20.0 | 20.0 | --- |
| Sodium-Ascorbate | 5.0 | 5.0 | 5.0 |
| Maltodextrin MD2023 (from Roquette) | --- | --- | 10.0 |
| Water | 25.0 | 24.0 | 30.0 |
| | | | |
| Total amount of PUFA | 9.0 | 9.0 | 9.0 |

### Examples 4-9

The following examples are prepared in analogy to the method of Example 1.

| **Ingredients** | **Exp.4** | **Exp.5** | **Exp.6** | **Exp.7** | **Exp.8** | **Exp.9** |
|---|---|---|---|---|---|---|
| | [wt-%] | [wt-%] | [wt-%] | [wt-%] | [wt-%] | [wt-%] |
| ROPUFA'30' n-3 Food Oil (from DSM) | 30.0 | 30.0 | 30.0 | 30.0 | 30.0 | 30.0 |
| OSA (octenyl-succinate) modified Starch Capsul® HS (from National Starch) | 25.0 | 25.0 | 25.0 | 25.0 | 20.0 | 15.0 |
| Sodium-Ascorbate | 5.0 | 5.0 | 5.0 | 5.0 | 5.0 | 5.0 |
| Sucrose | 10.0 | --- | --- | --- | --- | --- |
| Maltodextrin MD2023 (from Roquette) | --- | --- | 10.0 | --- | --- | --- |
| Maltodextrin Glucidex IT47 (from Roquette) | --- | --- | --- | 10.0 | --- | --- |
| Glycerol | --- | 10.0 | --- | --- | 20.0 | 30.0 |
| Water | 30.0 | 30.0 | 30.0 | 30.0 | 25.0 | 20.0 |
| | | | | | | |
| Total amount of PUFA | 9.0 | 9.0 | 9.0 | 9.0 | 9.0 | 9.0 |

## Claims

1. Use of an emulsion comprising
(i) 6 - 18 weight-% (wt-%), based on the total weight of the emulsion, of PUFA (polyunsaturated fatty acid), and
(ii) 12 - 35 wt-%, based on the total weight of the emulsion, of at least one emulsifier, which is a polymeric hydrocolloid originated from a plant source,
(iii) 5 - 40 wt-%, based on the total weight of the emulsion, of at least one adjuvant, and
(iv) 18 - 40 wt-%, based on the total weight of the emulsion, of water,
in a liquid food product.

2. Use of an emulsion according to claim 1, wherein the PUFAs have at least 2 carbon-carbon double bonds and consist of 16-24 carbon atoms (preferably 18-22 carbon atoms).

3. Use of an emulsion according to any of the preceding claims, wherein the PUFAs are triglycerides.

4. Use of an emulsion according to any of the preceding claims, wherein the emulsifier is chosen from the group consisting of modified starches, gum arabic and food grade lignosulfonates.

5. Use of an emulsion according to any of the preceding claims, wherein the adjuvants are selected from the group consisting of vitamins, co-enzymes, monosaccharides, disaccharides, oligosaccharides, polysaccharides, glycerol, triglycerides, water-soluble antioxidants and fat-soluble antioxidants

6. Use according to claim 1, wherein the food product is a beverage.

## Patentansprüche

1. Verwendung einer Emulsion umfassend
(i) PUFA (mehrfach ungesättigte Fettsäure) in einer Menge von 6 - 18 Gewichts-% (Gew.-%) in Bezug auf das Gesamtgewicht der Emulsion, und
(ii) mindestens einen Emulgator, bei dem es sich um ein polymeres Hydrokolloid, das von einem pflanzlichen Ausgangsmaterial stammt, handelt, in einer Menge von 12 - 35 Gew.-% in Bezug auf das Gesamtgewicht der Emulsion,
(iii) mindestens ein Adjuvans in einer Menge von 5 - 40 Gew.-% in Bezug auf das Gesamtgewicht der Emulsion, und
(iv) Wasser in einer Menge von 18 - 40 Gew.-% in Bezug auf das Gesamtgewicht der Emulsion
in einem flüssigen Nahrungsmittelprodukt.

2. Verwendung einer Emulsion nach Anspruch 1, wobei die PUFAs mindestens 2 Kohlenstoff-KohlenstoffDoppelbindungen aufweisen und aus 16 - 24 Kohlenstoffatomen (vorzugsweise 18 - 22 Kohlenstoffatomen) bestehen.

3. Verwendung einer Emulsion nach einem der vorhergehenden Ansprüche, wobei es sich bei den PUFAs um Triglyceride handelt.

4. Verwendung einer Emulsion nach einem der vorhergehenden Ansprüche, wobei der Emulgator aus der Gruppe bestehend aus modifizierten Stärken, Gummi arabicum sowie Ligninsulfonaten in Nahrungsmittelqualität ausgewählt ist.

5. Verwendung einer Emulsion nach einem der vorhergehenden Ansprüche, wobei die Adjuvantien aus der Gruppe bestehend aus Vitaminen, Koenzymen, Monosacchriden, Disacchariden, Oligosacchariden, Polysacchariden, Glycerin, Triglyceriden, wasserlöslichen Antioxidantien und fettlöslichen Antioxidantien ausgewählt sind.

6. Verwendung nach Anspruch 1, wobei es sich bei dem Nahrungsmittelprodukt um ein Getränk handelt.

## Revendications

1. Utilisation d'une émulsion comprenant
(i) 6-18 % en poids (% en poids), par rapport au poids total de l'émulsion, d'AGPI (acide gras polyinsaturé) et
(ii) 12-35 % en poids, par rapport au poids total de l'émulsion, d'au moins un émulsifiant, qui est un hydrocolloïde polymère provenant d'une source végétale,
(iii) 5-40 % en poids, par rapport au poids total de l'émulsion, d'au moins un adjuvant et
(iv) 18-40 % en poids, par rapport au poids total de l'émulsion, d'eau,
dans un produit alimentaire liquide.

2. Utilisation d'une émulsion selon la revendication 1, dans laquelle les AGPI ont au moins 2 doubles liaisons carbone-carbone et sont constitués de 16-24 atomes de carbone (de préférence de 18-22 atomes de carbone).

3. Utilisation d'une émulsion selon l'une quelconque des revendications précédentes, dans laquelle les AGPI sont des triglycérides.

4. Utilisation d'une émulsion selon l'une quelconque des revendications précédentes, dans laquelle l'émulsifiant est choisi dans le groupe constitué par les amidons modifiés, la gomme arabique et les lignosulfonates de qualité alimentaire.

5. Utilisation d'une émulsion selon l'une quelconque des revendications précédentes, dans laquelle les adjuvants sont choisis dans le groupe constitué par les vitamines, les coenzymes, les monosaccharides, les disaccharides, les oligosaccharides, les polysaccharides, le glycérol, les triglycérides, les antioxydants hydrosolubles et les antioxydants liposolubles.

6. Utilisation selon la revendication 1, dans laquelle le produit alimentaire est une boisson.
